# EUROPEAN PATENT APPLICATION

(11) **EP 3 029 890 A1**
(43) Date of publication of application: **08.06.2016**
(21) Application number: 13890367.9
(22) Date of filing: 29.07.2013
(51) Int. Cl.: H04L 12/66

(54) **CONVERSION METHOD FOR TRANSMISSION MECHANISM, USER EQUIPMENT AND BASE STATION**

(71) Applicant: Fujitsu Limited, Kawasaki-shi, Kanagawa 211-8588 (JP)
(72) Inventor: CHANG, Ningjuan, Beijing 100025 (CN); XU, Haibo, Beijing 100025 (CN); WANG, Weiwei, Beijing 100025 (CN)
(74) Representative: Cooper-Rolfe, Elizabeth Louise
(86) International application number: PCT/CN2013/080347
(87) International publication number: WO 2015/013869

(57) **Abstract**

Embodiments of the present disclosure provide a method of transmission scheme switch, a UE and a base station. The method of switch includes: a base station receives a paging message, the paging message containing identity of a UE; judges whether the UE uses a connectionless scheme for data transmission; and the base station transmits a radio resource control connection release message to the UE when the UE uses a connectionless scheme for data transmission. With the embodiments of the present disclosure, switch of the UE from a connectionless scheme to a conventional scheme may be realized, so as to perform data transmission.

## Description

### Technical Field

The present disclosure relates to the field of communications, and in particular to a method of transmission scheme switch, a UE and a base station in a transmission process of small data packets.

### Background

In an LTE network system, if a user equipment (UE) in an idle state performs data transmission or reception, it needs to be entered into a connected state from the idle state while establishing a control plane connection and a user plane connection with a network side. The control plane connection includes a radio resource control (RRC) connection between a UE and a base station (eNB) and an S1 connection between the eNB and a mobile management entity (MME); and the user plane connection includes a radio bearer(s) between the UE and the eNB and a connection between the eNB and a serving gateway (S-GW).

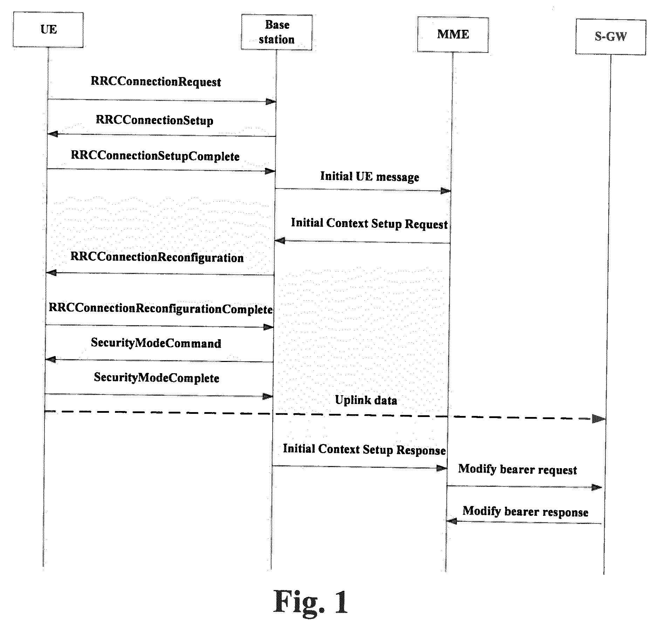

Figure 1 a flowchart of performing state switch of data transmission by a UE in the prior art. As shown in Fig. 1, switch of the UE from an idle state to a connected state and a series of establishment of connection between a control plane and a user plane may be implemented in this flow. Such a conventional scheme needing to initiate a series of service request to the network side may generally be referred to as a connection scheme.

And on the other hand, small data transmission is a typical characteristic in machine-type communication (MTC) applications and smart terminal traffics. The small data refer to a small amount of data packets transmitted and received between a UE and a network side, and such small data transmission may be frequent or infrequent. For example, in smart temperature detection application, MTC terminal equipment reports detected temperature values to a server every hour; in such application, data reported each time are only temperature values detected once, an amount of data is small, and which may be deemed as small data transmission.

In performing small data transmission by using an existing scheme, the UE needs to perform a set of service requests to the network side, and is switched from an idle state to a connected state to accept services of the network side, which may result in lowering of system resource utilization in comparison with the amount of the transmitted data. In order to increase the system resource utilization of the small data transmission, some solutions have been proposed till now.

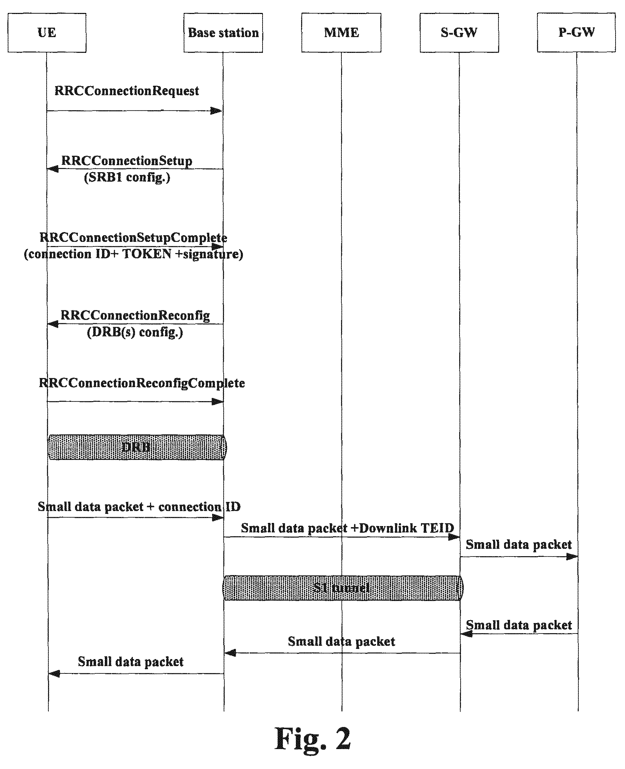

Figure 2 is a schematic diagram of an enhanced transmission scheme of small data packets in the prior art. As shown in Fig. 2, in this scheme, each small data packet transmission path is identified by a connection ID, and a corresponding relationship between the connection ID and an address of an S-GW (such as an IP address and TEID) is saved in an eNB. Taking uplink transmission as an example, when small data packet transmission occurs, a UE establishes an RRC connection with the eNB, and notifies the eNB of the connection ID of the small data packet transmission in the UE during the connection establishment.

As shown in Fig. 2, the UE carries connection ID information in uplink data packets, and after receiving the data packets, the eNB finds corresponding information on the address of the S-GW according to the connection ID in the data packets, and transmits the data packets to the S-GW; and at the same time, the eNB may carry information on an address of the eNB (TEID) in the uplink data packets, so that the S-GW transmits downlink data to the eNB.

As a control plane connection between the eNB and the MME is not needed to be established, the above enhanced transmission scheme of small data is generally referred to as data transmission of a connectionless scheme. By such means of carrying an address in data packets, data transmission paths between the eNB and the S-GW is established, and signaling overhead brought about by establishing data transmission paths between the eNB and the S-GW by the control plane site MME may be avoided.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

It was found by the inventors that when a UE performs transmission of small data packets by using a connectionless scheme, if other traffic occurs in the UE and such traffic is unsuitable for the currently-used connectionless scheme, such a case cannot be deal with in the prior art, and switch from the connectionless scheme to a connection scheme (a conventional scheme) cannot be achieved.

Embodiments of the present disclosure provide a method of transmission scheme switch, a UE and a base station, with an object being to achieve switch of a UE from a connectionless scheme to a conventional scheme to perform transmission of data packets.

According to an aspect of the embodiments of the present disclosure, there is provided a method of transmission scheme switch, including:
receiving, by a base station, a paging message, the paging message containing identity of a UE;
judging whether the UE performs data transmission by using a connectionless scheme; and
transmitting, by the base station, a radio resource control connection release message to the UE when the UE performs data transmission by using a connectionless scheme.

According to another aspect of the embodiments of the present disclosure, there is provided a method of transmission scheme switch, including:
receiving, by a UE, a radio resource control connection release message transmitted by a base station; and
releasing a radio resource control connection according to the radio resource control connection release message, so as to terminate data transmission performed by using a connectionless scheme.

According to still another aspect of the embodiments of the present disclosure, there is provided a method of transmission scheme switch, including:
judging, by a UE, whether an uplink service is suitable for using a connectionless scheme for data transmission when the uplink service is arrived; and
releasing, by the UE, a radio resource control connection when the uplink service is not suitable for using a connectionless scheme for data transmission, so as to terminate data transmission performed by using the connectionless scheme.

According to still another aspect of the embodiments of the present disclosure, there is provided a method of transmission scheme switch, including:
judging, by a UE, whether an uplink service is suitable for using a connectionless scheme for data transmission when the uplink service is arrived; and
performing, by the UE, modification and/or configuration on a radio bearer when the uplink service is not suitable for using a connectionless scheme for data transmission, so as to perform data transmission for the uplink service by using a connection scheme.

According to still another aspect of the embodiments of the present disclosure, there is provided a method of transmission scheme switch, including:
receiving, by a base station, an uplink information transmission message transmitted by a UE; and
transmitting an initial UE message to a mobile management entity.

According to still another aspect of the embodiments of the present disclosure, there is provided a method of transmission scheme switch, including:
receiving, by a mobile management entity, an initial UE message transmitted by a base station, the initial UE message containing information indicating the UE to use a connectionless scheme;
reestablishing a radio bearer to which the connectionless scheme corresponds; and
transmitting an initial context setup request message to the base station, the initial context setup request message containing information on setup and/or modification of the radio bearer.

According to still another aspect of the embodiments of the present disclosure, there is provided a base station, including:
a first receiving unit configured to receive a paging message, the paging message containing identity of a UE;
a first judging unit configured to judge whether the UE performs data transmission by using a connectionless scheme; and
a first transmitting unit configured to transmit a radio resource control connection release message to the UE when the UE performs data transmission by using a connectionless scheme.

According to still another aspect of the embodiments of the present disclosure, there is provided a UE, including:
a second receiving unit configured to receive a radio resource control connection release message transmitted by a base station; and
a first releasing unit configured to release radio resource control connection according to the radio resource control connection release message, so as to terminate data transmission performed by using a connectionless scheme.

According to still another aspect of the embodiments of the present disclosure, there is provided a UE, including:
a second judging unit configured to judge whether an uplink service is suitable for using a connectionless scheme for data transmission when the uplink service is arrived; and
a second releasing unit configured to release a radio resource control connection when the uplink service is not suitable for using a connectionless scheme for data transmission, so as to terminate data transmission performed by using the connectionless scheme.

According to still another aspect of the embodiments of the present disclosure, there is provided a UE, including:
a third judging unit configured to judge whether an uplink service is suitable for using a connectionless scheme for data transmission when the uplink service is arrived; and
a connection reconfiguring unit configured to perform modification and/or configuration on a radio bearer if the uplink service is not suitable for using a connectionless scheme for data transmission, so as to perform data transmission for the uplink service by using a connection scheme.

According to still another aspect of the embodiments of the present disclosure, there is provided a base station, including:
a sixth receiving unit configured to receive an uplink information transmission message transmitted by a UE; and
a fifth transmitting unit configured to transmit an initial UE message to a mobile management entity.

According to still another aspect of the embodiments of the present disclosure, there is provided a mobile management entity, including:
an eighth receiving unit configured to receive an initial UE message transmitted by a base station, the initial UE message containing information indicating the UE to use a connectionless scheme;
a reestablishing unit configured to reestablish a radio bearer to which the connectionless scheme corresponds; and
a seventh transmitting unit configured to transmit an initial context setup request message to the base station, the initial context setup request message containing information on setup and/or modification of the radio bearer.

According to still another aspect of the embodiments of the present disclosure, there is provided a communication system, including the UE and the base station as described above.

According to still another aspect of the embodiments of the present disclosure, there is provided a computer-readable program, wherein when the program is executed in a UE, the program enables a computer to carry out the method of transmission scheme switch as described above in the UE.

According to still another aspect of the embodiments of the present disclosure, there is provided a storage medium in which a computer-readable program is stored, wherein the computer-readable program enables a computer to carry out the method of transmission scheme switch as described above in a UE.

According to still another aspect of the embodiments of the present disclosure, there is provided a computer-readable program, wherein when the program is executed in a base station, the program enables a computer to carry out the method of transmission scheme switch as described above in the base station.

According to still another aspect of the embodiments of the present disclosure, there is provided a storage medium in which a computer-readable program is stored, wherein the computer-readable program enables a computer to carry out the method of transmission scheme switch as described above in a base station.

An advantage of the embodiments of the present disclosure exists in that for a UE using the connectionless scheme to perform data transmission, the radio resource control connection is released and then a service request is performed in an uplink scenario or a downlink scenario, or a radio bearer is reconfigured, which may achieve switch of the UE from the connectionless scheme to a conventional scheme, so that when uplink or downlink traffics occur, the UE can use a more suitable transmission scheme.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
Figure 1 is a flowchart of performing state switch of data transmission by a UE in the prior art;
Figure 2 is a schematic diagram of an enhanced transmission scheme of small data packets in the prior art;
Figure 3 is a flowchart of a method of transmission scheme switch of Embodiment 1 of the present disclosure;
Figure 4 is another flowchart of the method of transmission scheme switch of Embodiment 1 of the present disclosure;
Figure 5 is still another flowchart of the method of transmission scheme switch of Embodiment 1 of the present disclosure;
Figure 6 is a flowchart of a method of transmission scheme switch of Embodiment 2 of the present disclosure;
Figure 7 is another flowchart of the method of transmission scheme switch of Embodiment 2 of the present disclosure;
Figure 8 is still another flowchart of the method of transmission scheme switch of Embodiment 2 of the present disclosure;
Figure 9 is a flowchart of a method of transmission scheme switch of Embodiment 3 of the present disclosure;
Figure 10 is another flowchart of the method of transmission scheme switch of Embodiment 3 of the present disclosure;
Figure 11 is still another flowchart of the method of transmission scheme switch of Embodiment 3 of the present disclosure;
Figure 12 is yet still another flowchart of the method of transmission scheme switch of Embodiment 3 of the present disclosure;
Figure 13 is a schematic diagram of a structure of a base station of Embodiment 4 of the present disclosure;
Figure 14 is a schematic diagram of a structure of a UE of Embodiment 4 of the present disclosure;
Figure 15 is a schematic diagram of a structure of a UE of Embodiment 5 of the present disclosure;
Figure 16 is another schematic diagram of the structure of the UE of Embodiment 5 of the present disclosure;
Figure 17 is a schematic diagram of a structure of a UE of Embodiment 6 of the present disclosure;
Figure 18 is a schematic diagram of a structure of a base station of Embodiment 6 of the present disclosure;
Figure 19 is a schematic diagram of a structure of a mobile management entity of Embodiment 6 of the present disclosure; and
Figure 20 is a schematic diagram of a structure of a communication system of Embodiment 7 of the present disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

### Embodiment 1

An embodiment of the present disclosure provides a method of transmission scheme switch, which shall be described respectively from a base station side and a UE side in a downlink data transmission scenario. In this embodiment, the UE is using a connectionless scheme to perform data transmission; and at this moment, a downlink traffic comes, which is unsuitable to be transmitted by using the connectionless scheme, and the UE is triggered to be switched between schemes, being switched from the connectionless scheme to a connection scheme (a conventional scheme).

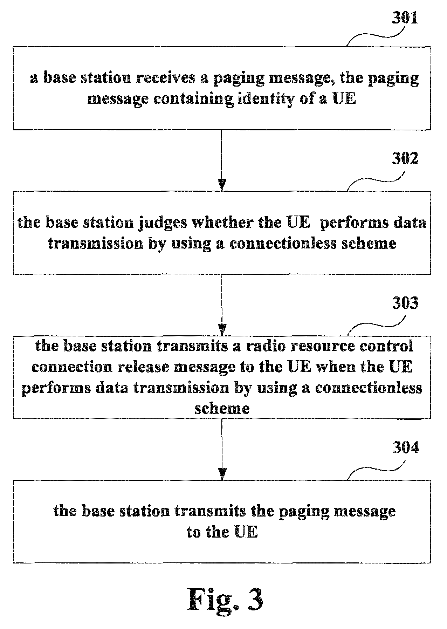

Fig. 3 is a flowchart of a method of transmission scheme switch of the embodiment of the present disclosure, which shall be described from a base station side. As shown in Fig. 3, the method includes:
step 301: a base station receives a paging message, the paging message containing identity of a UE;
step 302: the base station judges whether the UE performs data transmission by using a connectionless scheme; and
step 303: the base station transmits a radio resource control connection release message to the UE when the UE performs data transmission by using a connectionless scheme.

In this embodiment, when a downlink traffic is arrived, an MME may transmit the paging message to an eNB, the paging message carrying the identity of the UE. After receiving the paging message, the eNB may judge the UE whether uses the connectionless scheme for data transmission or not according to the identity of the UE.

For example, the eNB may match an identity of a UE connected to the eNB and using the connectionless scheme with the identity of the UE in the paging message; and if the eNB finds that the UE is using the connectionless scheme for communication, the eNB transmits an RRC connection release message to the UE.

As shown in Fig. 3, the method may further include:
step 304: the base station transmits the paging message to the UE.

Therefore, what is different from the prior art is that after the eNB receives the paging message transmitted by the MME and when it is judged that the UE of the downlink traffic is performing data transmission of the connectionless scheme, the eNB transmits the RRC connection release message to the UE. After the UE releases an RRC connection, the eNB transmits the paging message, so that the UE initiates data transmission of a connection scheme. Hence, not only switch of the UE from the connectionless scheme to the conventional scheme for transmission of data packets may be realized, but also transmission of downlink data may be performed in time.

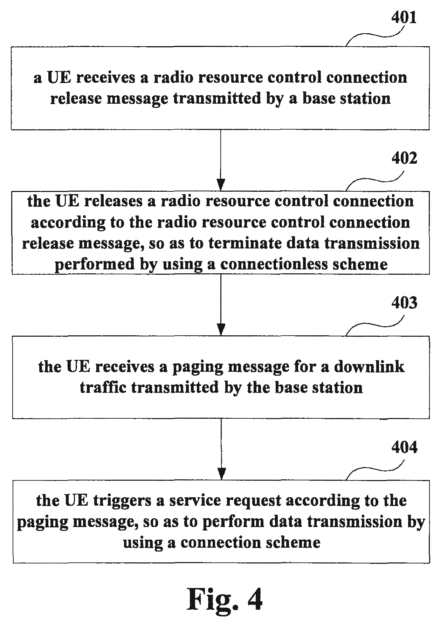

Fig. 4 is another flowchart of the method of transmission scheme switch of the embodiment of the present disclosure, which shall be described from a UE side. As shown in Fig. 4, the method includes:
step 401: a UE receives a radio resource control connection release message transmitted by a base station; and
step 402: the UE releases a radio resource control connection according to the radio resource control connection release message, so as to terminate data transmission performed by using a connectionless scheme.

In particular, for example, an RRC stratum of the UE receives the RRC connection release message and releases an RRC connection; the RRC stratum transmits an indication on RRC connection release to a non-access stratum (NAS) of the UE; and after receiving the indication, the NAS stratum terminates data transmission performed by using the connectionless scheme within a predetermined period of time. The UE may further terminate a timer related to the connectionless scheme, or may deem that the timer expires, such as a connectionless activated timer, etc.

As shown in Fig. 4, the method of switch may further include:
step 403: the UE receives a paging message for a downlink traffic transmitted by the base station; and
step 404: the UE triggers a service request according to the paging message, so as to perform data transmission by using a connection scheme.

In this embodiment, the UE enters into an idle state after releasing the RRC connection. And after receiving the paging message transmitted by the base station, the UE may trigger the service request to perform data transmission of the connection scheme. Fig. 1 may be referred to for how to trigger the service request.

In this embodiment, alternatively, the paging message may further contain indication information indicating that the UE configures a connectionless scheme, which may be contained in the paging message by the MME. After receiving the paging message, the eNB may further judge whether the paging massage contains the indication information.

For example, the eNB may match the identity of the UE in the paging message with the identity of the UE connected to the eNB and using the connectionless scheme, only when the paging message contains the indication information. Hence, whether the UE is using the connectionless scheme for data transmission may be judged more accurately and efficiently.

In this embodiment, the RRC connection release message may further contain information indicating a cause of connection release of this time. For example, the message may contain a cause field, the field indicating that the cause of connection release of this time is that a transmission scheme needs to be switched due to arrival of the downlink traffic. Hence, after receiving the RRC connection release message containing the cause, the UE needs not to use the connectionless scheme to perform a connection again, so as to avoid waste of resources due to re-initiation of the connectionless scheme by the UE.

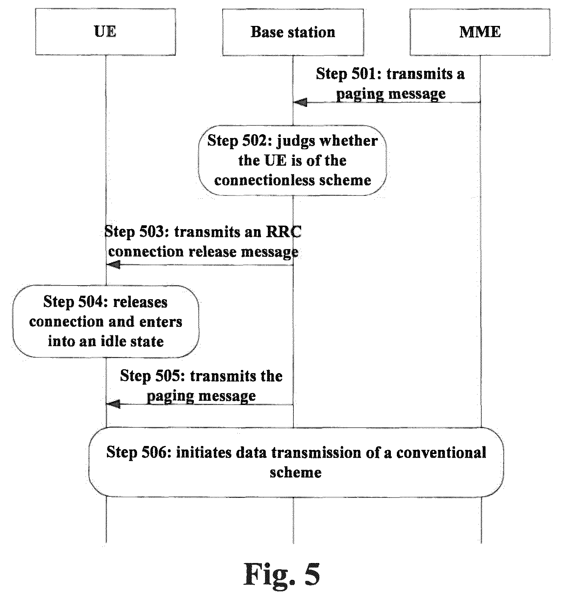

Fig. 5 is still another flowchart of the method of transmission scheme switch of the embodiment of the present disclosure, which shall be described from a network side and a UE side. As shown in Fig. 5, the method includes:
step 501: an MME transmits a paging message to an eNB;
step 502: the eNB judges whether the UE is performing data transmission of the connectionless scheme; and executes the following steps in a case where the data transmission of the connectionless scheme is performed;
step 503: the eNB transmits an RRC connection release message to the UE;
step 504: the UE releases an RRC connection and enters into an idle state;
step 505: the eNB transmits the paging message to the UE; and
step 506: the UE initiates data transmission of a conventional scheme.

It can be seen from the above embodiment that for a UE using a connectionless scheme for data transmission, a base station may release a radio resource control connection release message in a downlink scenario, and the UE initiates a service request after releasing a radio resource control connection, thereby realizing switch of the UE from the connectionless scheme to a conventional scheme for performing transmission of data packets, so that when downlink traffics occur, the UE is able to switch the transmission scheme, and hence a more suitable transmission scheme is used for data transmission.

### Embodiment 2

An embodiment of the present disclosure provides a method of transmission scheme switch, which shall be described from a UE side in an uplink data transmission scenario. In this embodiment, the UE is using a connectionless scheme to perform data transmission; and at this moment, an uplink traffic is initiated, which is unsuitable to be transmitted by using the connectionless scheme, and the UE needs to be triggered to be switched between schemes, being switched from the connectionless scheme to a connection scheme (a conventional scheme).

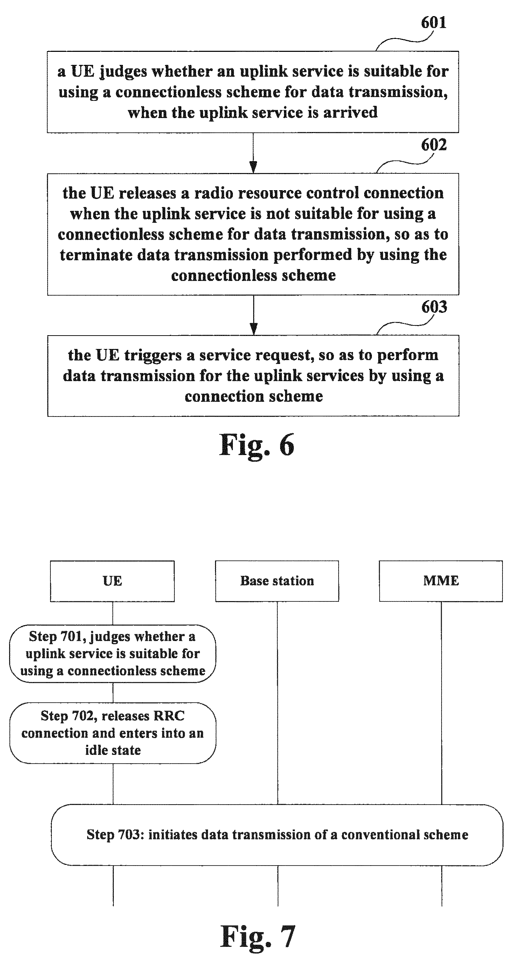

Fig. 6 is a flowchart of a method of transmission scheme switch of the embodiment of the present disclosure, which shall be described from a UE side. As shown in Fig. 6, the method includes:
step 601: a UE judges whether an uplink service is suitable for using a connectionless scheme for data transmission, when the uplink service is arrived; and
step 602: the UE releases a radio resource control connection when the uplink service is not suitable for using a connectionless scheme for data transmission, so as to terminate data transmission performed by using the connectionless scheme.

In step 601, there are many methods for judging whether the uplink service is suitable for using a connectionless scheme for data transmission. In particular, the uplink service may be compared with a pre-obtained traffic flow template (TFT); and the uplink service may be determined as being suitable for using a connectionless scheme for data transmission, if the uplink service is in consistence with the TFT.

For example, the TFT may be obtained by transmission by a network side entity, such as an MME, to the UE, and may also be preconfigured by the UE. The TFT is a set in which traffic attributes, such as a serial number of a source port of the traffic, a serial number of a target port, a source IP address, a target IP address, and a transmission protocol number, etc., are provided. The relevant art may be referred to for detailed contents of the TFT, which may be determined according to an actual situation.

Furthermore, an attribute value of the above uplink service may be compared with a predefined threshold value, and whether the uplink service is suitable for using a connectionless scheme for data transmission may be determined according to a result of comparison. The attribute value of the uplink service may include one piece of the following information or a combination thereof: information on total amount of data, information on a size of a data packet, information on a size of a burst data stream, information on a data packet interval, and information on an average data packet rate.

For example, if an amount of data of the uplink service (such as the total amount of data, the size of a data packet, or the size of a burst data stream) is greater than a predefined threshold value, and/or the data packet interval is less than a predefined threshold value, and/or the average data packet rate is greater than a predefined threshold value, it is judged that the uplink service is not suitable for using a connectionless scheme for data transmission.

It should be noted that judging whether the uplink service is suitable for using a connectionless scheme for data transmission is illustrated above only. However, the present disclosure is not limited thereto, and a particular implementation may be determined according to an actual situation.

In step 602, in particular, if it is judged by the UE that the uplink service is not suitable for using a connectionless scheme for data transmission, an NAS stratum of the UE may trigger connection release, and indicate an RRC stratum to initiate an RRC connection release process. And the UE may further terminate a timer related to the connectionless scheme, or may deem that the timer expires, such as a connectionless activated timer, etc.

As shown in Fig. 6, the method of switch may further include:
step 603: the UE triggers a service request, so as to perform data transmission for the uplink services by using a connection scheme.

Hence, what is different from the prior art is that after judging that the uplink service is not suitable for using a connectionless scheme for data transmission, the UE releases the RRC connection. After the UE releases the RRC connection, data transmission of a connection scheme is initiated. Therefore, not only switch of the UE from the connectionless scheme to the conventional scheme for transmission of data packets may be realized, but also transmission of downlink data may be performed in time.

In an implementation, after executing step 601, the UE may release the RRC connection on its own, without acknowledgement of a network side. In this implementation, a deactivated timer of the connectionless scheme of the UE will be maintained in the base station, and when the timer expires, the network side will deactivate the connectionless scheme of the UE.

Fig. 7 is another flowchart of the method of transmission scheme switch of the embodiment of the present disclosure, which shall be described from a UE side. As shown in Fig. 7, the method includes:
step 701: the UE judges whether the uplink service is suitable for using a connectionless scheme for data transmission; and executes the following steps in a case where the uplink service is not suitable for using a connectionless scheme for data transmission;
step 702: the UE releases an RRC connection and enters into an idle state; and
step 703: the UE initiates data transmission of a conventional scheme.

In another implementation, after executing step 601, the UE may transmit an RRC connection release request to the eNB, and release the RRC connection after receiving an RRC connection release message transmitted by the base station.

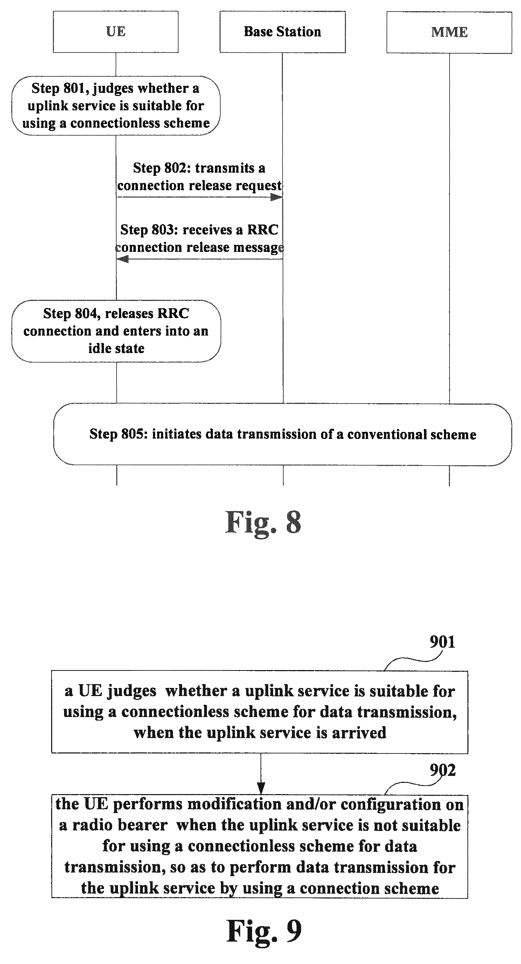

Fig. 8 is still another flowchart of the method of transmission scheme switch of the embodiment of the present disclosure, which shall be described from a network side and a UE side. As shown in Fig. 8, the method includes:
step 801: a UE judges whether an uplink service is suitable for using a connectionless scheme for data transmission; and executes the following steps in a case where the uplink service is not suitable for using a connectionless scheme for data transmission;
step 802: the UE transmits a connection release request to a base station;
step 803: the UE receives an RRC connection release message transmitted by the base station;
step 804: the UE releases the RRC connection and enters into the idle state; and
step 805: the UE initiates data transmission of a conventional scheme.

In particular, step 802 may include: the NAS stratum of the UE triggers the connection release, and indicates the RRC stratum of the UE to initiate the RRC connection release; and the RRC stratum of the UE transmits the RRC connection release request to the base station. And steps 803 and 804 may include: the RRC stratum receives the RRC connection release message transmitted by the base station, and releases the RRC connection; the RRC stratum transmits the indication on the RRC connection release to the NAS stratum; and the NAS stratum terminates the data transmission by using the connectionless scheme, within a predefined period of time after receiving the indication.

In this implementation, the connection release request may further contain information indicating a cause of connection release of this time. For example, the request may contain a field of a cause of a release request, the field indicating a cause of requesting connection release by the UE, and the cause field may be used to assist the eNB in making a policy of performing connection release.

It can be seen from the above embodiment that for a UE using a connectionless scheme for data transmission, after judging in an uplink scenario that the uplink service is not suitable for using a connectionless scheme for data transmission, the UE may release the RRC connection on its own or release the RRC connection after acknowledgement of the eNB; and the UE initiates the service request after releasing the RRC connection, thereby realizing switch of the UE from the connectionless scheme to a conventional scheme for performing transmission of data packets, so that when downlink traffics occur, the UE is able to switch the transmission scheme, and hence a more suitable transmission scheme is used for data transmission.

### Embodiment 3

An embodiment of the present disclosure provides a method of transmission scheme switch, which shall be described from a network side and a UE side in an uplink data transmission scenario. In this embodiment, the UE is using a connectionless scheme to perform data transmission; and at this moment, an uplink traffic is initiated, which is unsuitable to be transmitted by using the connectionless scheme, and the UE needs to be triggered to be switched between schemes, being switched from the connectionless scheme to a connection scheme (a conventional scheme).

Fig. 9 is a flowchart of a method of transmission scheme switch of the embodiment of the present disclosure, which shall be described from the UE side. As shown in Fig. 9, the method includes:
step 901: the UE judges whether an uplink service is suitable for using a connectionless scheme for data transmission, when the uplink service is arrived; and
step 902: the UE performs modification and/or configuration on a radio bearer when the uplink service is not suitable for using a connectionless scheme for data transmission, so as to perform data transmission for the uplink service by using a connection scheme.

In this embodiment, the method described in Embodiment 2 may be used to judge whether the uplink service is suitable for using a connectionless scheme for data transmission. Particularly, the uplink service may be compared with a pre-obtained TFT, and if the uplink service is in consistence with the TFT, it may be determined that the uplink service is suitable for using a connectionless scheme for data transmission. Or, an attribute value of the uplink service may be compared with a predefined threshold value, and whether the uplink service is suitable for using a connectionless scheme for data transmission may be determined according to a result of comparison. However, the present disclosure is not limited thereto, and a particular implementation may be determined according to an actual situation.

In this embodiment, the performing modification and/or configuration on the radio bearer by the UE in step 902 may include: the UE interrupts the data transmission performed by using the connectionless scheme, and the UE transmits an uplink information transmission message to a base station; the UE receives a radio resource control connection reconfiguration message transmitted by the base station; and performing modification and/or configuration on the radio bearer according to the radio resource control connection reconfiguration message, so as to perform data transmission for the uplink service by using a connection scheme.

For example, an RRC stratum of the UE may interrupt a bearer for performing the data transmission by using the connectionless scheme, and the UE may further terminate a timer related to the connectionless scheme, or may deem that the timer expires, such as a connectionless activated timer, etc. And at the same time, an NAS stratum of the UE may initiate a service request process to the eNB, and the service request message may be contained in a ULInformationTransfer message. And the UE receives an RRCConnectionReconfiguration message transmitted by the eNB, performs the modification and/or configuration corresponding to the radio bearer, and recovers interrupted radio bearer, and at the same time, the UE enters into a conventional scheme for performing data transmission.

In this embodiment, alternatively, the ULInformationTransfer message may further contain indication information used for indicating to an MME that the UE is performing the data transmission of the connectionless scheme.

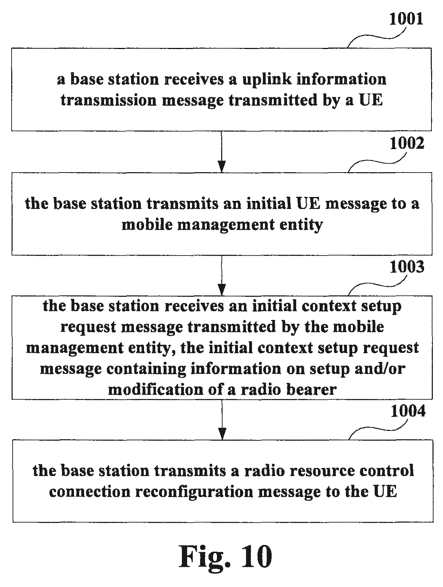

Fig. 10 is another flowchart of the method of transmission scheme switch of the embodiment of the present disclosure, which shall be described from a base station side. As shown in Fig. 10, the method includes:
step 1001: a base station receives an uplink information transmission message transmitted by a UE; and
step 1002: the base station transmits an initial UE message to a mobile management entity.

In this embodiment, the eNB may transmit the initial UE message to the MME after receiving the ULInformationTransfer message transmitted by the UE. Alternatively, the initial UE message may further contain information indicating the UE to use the connectionless scheme.

As shown in Fig. 10, the method may further include:
step 1003: the base station receives an initial context setup request message transmitted by the mobile management entity, the initial context setup request message containing information on setup and/or modification of a radio bearer; and
step 1004: the base station transmits a radio resource control connection reconfiguration message to the UE.

In this embodiment, the eNB may receive an InitialContextSetupRequest message transmitted by the MME, and the InitialContextSetupRequest message may contain such information as E-RAB modification/setup, etc. And the base station may transmit the RRCConnectionReconfiguration message to the UE, and the RRCConnectionReconfiguration message may contain such information as RB modification/addition, etc.

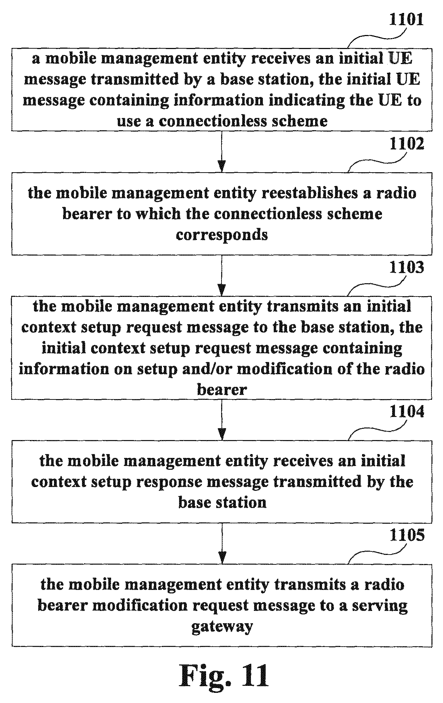

Fig. 11 is still another flowchart of the method of transmission scheme switch of the embodiment of the present disclosure, which shall be described from an MME side. As shown in Fig. 11, the method includes:
step 1101: a mobile management entity receives an initial UE message transmitted by a base station, the initial UE message containing information indicating the UE to use a connectionless scheme;
step 1102: the mobile management entity reestablishes a radio bearer to which the connectionless scheme corresponds; and
step 1103: the mobile management entity transmits an initial context setup request message to the base station, the initial context setup request message containing information on setup and/or modification of the radio bearer.

In this embodiment, after the MME receives the initial UE message transmitted by the base station, if the message contains the information indicating the UE to use a connectionless scheme, the MME reestablishes the radio bearer to which an original connectionless scheme corresponds, so that the radio bearer is switched to using a conventional scheme for data transmission. And then, the MME may transmit the InitialContextSetupRequest message to the eNB.

As shown in Fig. 11, the method may further include:
step 1104: the mobile management entity receives an initial context setup response message transmitted by the base station; and
step 1105: the mobile management entity transmits a radio bearer modification request message to a serving gateway.

In this embodiment, the MME may receive the InitialContextSetupResponse message transmitted by the eNB; the MME may initiate a radio bearer modification/setup process to the S-GW; and the S-GW sets up and modify corresponding radio bearer, and the UE is switched to a conventional scheme for data transmission.

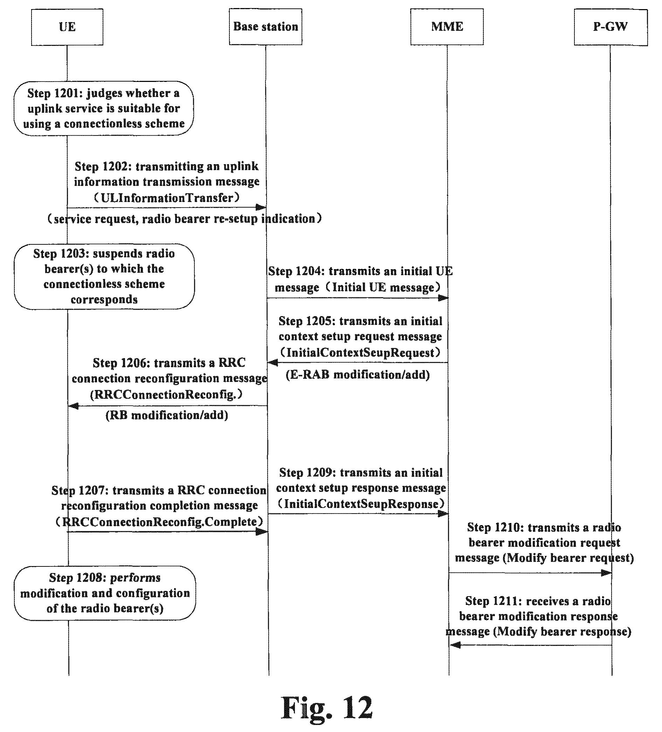

Fig. 12 is still another flowchart of the method of transmission scheme switch of the embodiment of the present disclosure, which shall be described from a network side and a UE side. As shown in Fig. 12, the method includes:
step 1201: a UE judges whether an uplink service is suitable for using a connectionless scheme for data transmission, when the uplink service is arrived;
step 1202: the UE transmits an uplink information transmission message to a base station;
step 1203: the UE suspends a radio bearer to which the connectionless scheme corresponds;
step 1204: the base station transmits an initial UE message to a mobile management entity;
step 1205: the mobile management entity reestablishes the radio bearer to which the connectionless scheme corresponds, and transmits an initial context setup request message to the base station, the initial context setup request message containing setup and/or modification information on the radio bearer;
step 1206: the base station transmits a radio resource control connection reconfiguration message to the UE;
step 1207: the UE transmits a radio resource control connection reconfiguration completion message to the base station;
step 1208: the UE performs the setup and/or modification of the radio bearer according to the radio resource control connection reconfiguration message;
step 1209: the base station transmits an initial context setup response message to the mobile management entity;
step 1210: the mobile management entity transmits a radio bearer modification request message to a serving gateway; and
step 1211: the mobile management entity receives a radio bearer modification response message transmitted by the serving gateway.

It should be noted that the flow shown in Fig. 12 is only illustration of the present disclosure. However, the present disclosure is not limited thereto, for example, orders of execution of the above steps may be adjusted, etc., and a particular implementation may be determined according to an actual situation.

It can be seen from the above embodiment that for a UE using a connectionless scheme for data transmission, after judging in an uplink scenario that the uplink service is not suitable for using a connectionless scheme for data transmission, the radio bearer may be modified or reconfigured, thereby realizing switch of the UE from the connectionless scheme to a conventional scheme for performing transmission of data packets, so that when downlink traffics occur, the UE is able to switch the transmission scheme, and hence a more suitable transmission scheme is used for data transmission.

### Embodiment 4

An embodiment of the present disclosure provides a base station and a UE, which corresponds to the method of transmission scheme switch described in Embodiment 1, with contents identical to those in Embodiment 1 being not going to be described any further.

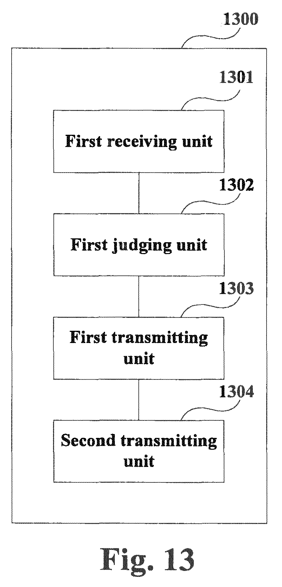

Fig. 13 is a schematic diagram of a structure of the base station of the embodiment of the present disclosure. As shown in Fig. 13, a base station 1300 includes: a first receiving unit 1301, a first judging unit 1302 and a first transmitting unit 1303. Other parts of the base station 1300 are not shown, and the relevant art may be referred to.

The first receiving unit 1301 is configured to receive a paging message, the paging message containing identity of a UE; the first judging unit 1302 is configured to judge whether the UE uses a connectionless scheme for data transmission; and the first transmitting unit 1303 is configured to transmit a radio resource control connection release message to the UE when the UE uses a connectionless scheme for data transmission.

As shown in Fig. 13, the base station 1300 may further include a second transmitting unit 1304 configured to transmit the paging message to the UE.

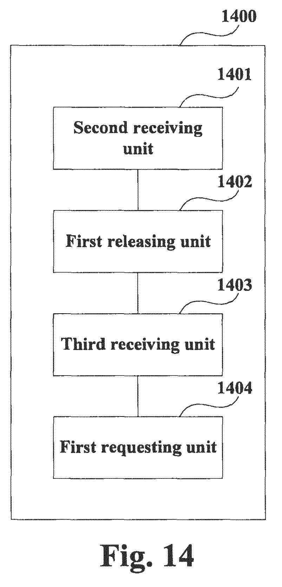

Fig. 14 is a schematic diagram of a structure of a UE of the embodiment of the present disclosure. As shown in Fig. 14, a UE 1400 includes: a second receiving unit 1401 and a first releasing unit 1402. Other parts of the UE 1400 are not shown, and the relevant art may be referred to.

The second receiving unit 1401 is configured to receive a radio resource control connection release message transmitted by a base station; and the first releasing unit 1402 is configured to release a radio resource control connection according to the radio resource control connection release message, so as to terminate data transmission performed by using a connectionless scheme.

As shown in Fig. 14, the UE 1400 may further include: a third receiving unit 1403 and a first requesting unit 1404. The third receiving unit 1403 is configured to receive a paging message for a downlink service transmitted by the base station; and the first requesting unit 1404 is configured to trigger a service request according to the paging message, so as to perform data transmission by using a connection scheme.

It can be seen from the above embodiment that for a UE using a connectionless scheme for data transmission, a base station may release a radio resource control connection release message in a downlink scenario, and the UE initiates a service request after releasing a radio resource control connection, thereby realizing switch of the UE from the connectionless scheme to a conventional scheme for performing transmission of data packets, so that when downlink traffics occur, the UE is able to switch the transmission scheme, and hence a more suitable transmission scheme is used for data transmission.

### Embodiment 5

An embodiment of the present disclosure provides a UE, which corresponds to the method of transmission scheme switch described in Embodiment 2, with contents identical to those in Embodiment 2 being not going to be described any further.

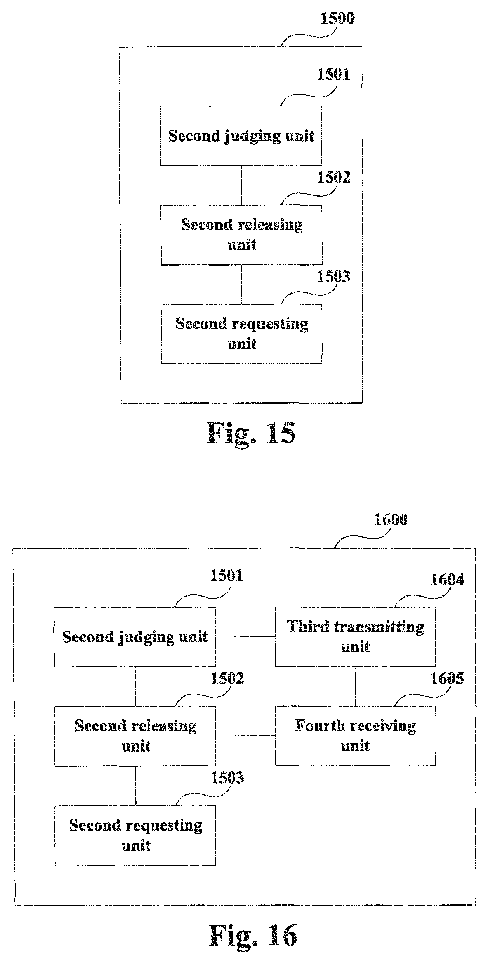

Fig. 15 is a schematic diagram of a structure of a UE of the embodiment of the present disclosure. As shown in Fig. 15, a UE 1500 includes: a second judging unit 1501 and a second releasing unit 1502. Other parts of the UE 1500 are not shown, and the relevant art may be referred to.

The second judging unit 1501 is configured to judge whether an uplink service is suitable for using a connectionless scheme for data transmission, when the uplink service is arrived; and the second releasing unit 1502 is configured to release a radio resource control connection when the uplink service is not suitable for using a connectionless scheme for data transmission, so as to terminate data transmission performed by using the connectionless scheme.

As shown in Fig. 15, the UE 1500 may further include a second requesting unit 1503 configured to trigger a service request, so as to perform data transmission for the uplink services by using a connection scheme.

In an implementation, the UE may release the RRC connection on its own, without acknowledgement of a network side.

In another implementation, the UE may transmit an RRC connection release request to the base station, and release the RRC connection after receiving an RRC connection release message transmitted by the base station.

Fig. 16 is another schematic diagram of the structure of the UE of the embodiment of the present disclosure. As shown in Fig. 16, a UE 1600 includes: a second judging unit 1501 and a second releasing unit 1502. Furthermore, as shown in Fig. 16, the UE 1600 may include a second requesting unit 1503.

As shown in Fig. 16, the UE 1600 may further include: a third transmitting unit 1604 and a fourth receiving unit 1605. The third transmitting unit 1604 is configured to transmit a connection release request to a base station; and the fourth receiving unit 1605 is configured to receive a radio resource control connection release message transmitted by the base station, and terminate the data transmission performed by using the connectionless scheme.

It can be seen from the above embodiment that for a UE using a connectionless scheme for data transmission, after judging in an uplink scenario that the uplink service is not suitable for using a connectionless scheme for data transmission, the UE may release the RRC connection on its own, or release the RRC connection after acknowledgement of a base station, and the UE initiates a service request after releasing the RRC connection, thereby realizing switch of the UE from the connectionless scheme to a conventional scheme for performing transmission of data packets, so that when downlink traffics occur, the UE is able to switch the transmission scheme, and hence a more suitable transmission scheme is used for data transmission.

### Embodiment 6

An embodiment of the present disclosure provides a UE, a base station and a mobile management entity, which corresponds to the method of transmission scheme switch described in Embodiment 3, with contents identical to those in Embodiment 3 being not going to be described any further.

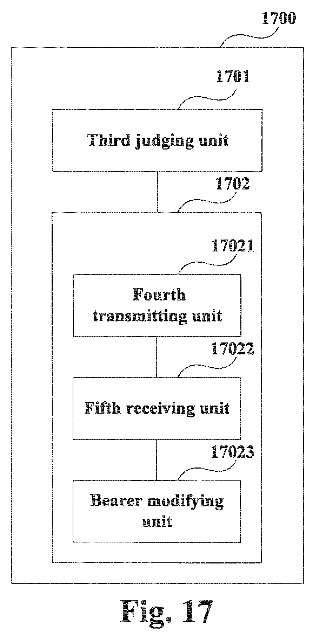

Fig. 17 is a schematic diagram of a structure of the UE of the embodiment of the present disclosure. As shown in Fig. 17, a UE 1700 includes: a third judging unit 1701 and a connection reconfiguring unit 1702. Other parts of the UE 1700 are not shown, and the relevant art may be referred to.

The third judging unit 1701 is configured to judge whether an uplink service is suitable for using a connectionless scheme for data transmission, when the uplink service is arrived; and the connection reconfiguring unit 1702 is configured to perform modification and/or configuration on a radio bearer when the uplink service is not suitable for using a connectionless scheme for data transmission, so as to perform data transmission for the uplink services by using a connection scheme.

As shown in Fig. 17, the connection reconfiguring unit 1702 may include: a fourth transmitting unit 17021, a fifth receiving unit 17022 and a bearer modifying unit 17023. The fourth transmitting unit 17021 is configured to interrupt the data transmission performed by using the connectionless scheme, and transmit an uplink information transmission message to a base station; the fifth receiving unit 17022 is configured to receive a radio resource control connection reconfiguration message transmitted by the base station; and the bearer modifying unit 17023 is configured to perform modification and/or configuration on a radio bearer according to the radio resource control connection reconfiguration message, so as to perform data transmission for the uplink services by using a connection scheme.

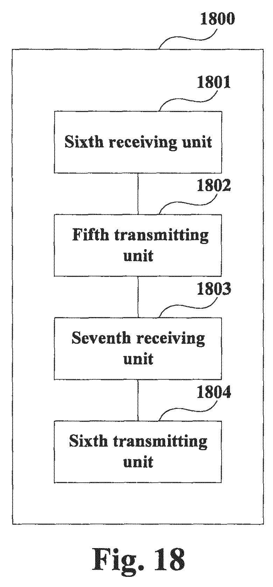

Fig. 18 is a schematic diagram of a structure of the base station of the embodiment of the present disclosure. As shown in Fig. 18, a UE 1800 includes: a sixth receiving unit 1801 and a fifth transmitting unit 1802. Other parts of the base station 1800 are not shown, and the relevant art may be referred to.

The sixth receiving unit 1801 is configured to receive an uplink information transmission message transmitted by a UE; and the fifth transmitting unit 1802 is configured to transmit an initial UE message to a mobile management entity.

As shown in Fig. 18, the UE 1800 may further include: a seventh receiving unit 1803 and a sixth transmitting unit 1804. The seventh receiving unit 1803 is configured to receive an initial context setup request message transmitted by the mobile management entity, the initial context setup request message containing information on setup and/or modification of a radio bearer; and the sixth transmitting unit 1804 is configured to transmit a radio resource control connection reconfiguration message to the UE.

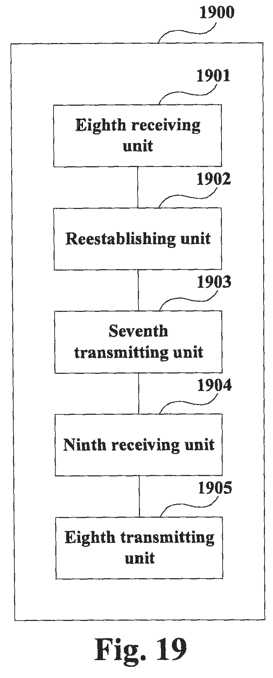

Fig. 19 is a schematic diagram of a structure of the mobile management entity of the embodiment of the present disclosure. As shown in Fig. 19, a mobile management entity 1900 includes: an eighth receiving unit 1901, a reestablishing unit 1902 and a seventh transmitting unit 1903. Other parts of the mobile management entity 1900 are not shown, and the relevant art may be referred to.

The eighth receiving unit 1901 is configured to receive an initial UE message transmitted by a base station, the initial UE message containing information indicating the UE to use a connectionless scheme; the reestablishing unit 1902 is configured to reestablish a radio bearer to which the connectionless scheme corresponds; and the seventh transmitting unit 1903 is configured to transmit an initial context setup request message to the base station, the initial context setup request message containing information on setup and/or modification of the radio bearer.

As shown in Fig. 19, the mobile management entity 1900 may further include: a ninth receiving unit 1904 and an eighth transmitting unit 1905. The ninth receiving unit 1904 is configured to receive an initial context setup response message transmitted by the base station; and the eighth transmitting unit 1905 is configured to transmit a radio bearer modification request message to a serving gateway.

It can be seen from the above embodiment that for a UE using a connectionless scheme for data transmission, after judging in an uplink scenario that the uplink service is not suitable for using a connectionless scheme for data transmission, the radio bearer may be modified or reconfigured, thereby realizing switch of the UE from the connectionless scheme to a conventional scheme for performing transmission of data packets, so that when downlink traffics occur, the UE is able to switch the transmission scheme, and hence a more suitable transmission scheme is used for data transmission.

### Embodiment 7

An embodiment of the present disclosure provides a communication system, including the UE and the base station as described in Embodiment 4; or including the UE as claimed in Embodiment 5; or including the UE, the base station and the mobile management entity as claimed in Embodiment 6.

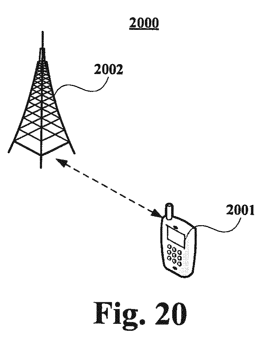

Fig. 20 is a schematic diagram of a structure of the communication system of the embodiment of the present disclosure. As shown in Fig. 20, the communication system 200 includes a UE 2001 and a base station 2002. The base station 2002 may be the base station 1300 in Embodiment 4 or the base station 1800 in Embodiment 6; and the UE 2001 may be the UE 1400 in Embodiment 4, or the UE 1500 or the UE 1600 in Embodiment 6, or the UE 1700 in Embodiment 6. Furthermore, for the sake of simplicity, the mobile management entity is not shown in Fig. 20.

An embodiment of the present disclosure further provides a computer-readable program, wherein when the program is executed in a UE, the program enables a computer to carry out the method of transmission scheme switch as described in Embodiment 1, 2 or 3, in the UE.

An embodiment of the present disclosure further provides a storage medium in which a computer-readable program is stored, wherein the computer-readable program enables a computer to carry out the method of transmission scheme switch as described in Embodiment 1, 2 or 3, in a UE.

An embodiment of the present disclosure further provides a computer-readable program, wherein when the program is executed in a base station, the program enables a computer to carry out the method of transmission scheme switch as described in Embodiment 1 or 3 in the base station.

An embodiment of the present disclosure further provides a storage medium in which a computer-readable program is stored, wherein the computer-readable program enables a computer to carry out the method of transmission scheme switch as described in Embodiment 1 or 3 in a base station.

An embodiment of the present disclosure further provides a computer-readable program, wherein when the program is executed in a mobile management entity, the program enables a computer to carry out the method of transmission scheme switch as described in Embodiment 3 in the mobile management entity.

An embodiment of the present disclosure further provides a storage medium in which a computer-readable program is stored, wherein the computer-readable program enables a computer to carry out the method of transmission scheme switch as described in Embodiment 3 in a mobile management entity.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

## Claims

1. A method of transmission scheme switch, comprising:
receiving, by a base station, a paging message, the paging message containing identity of a UE;
judging whether the UE performs data transmission by using a connectionless scheme; and
transmitting, by the base station, a radio resource control connection release message to the UE when the UE performs data transmission by using a connectionless scheme.

2. The method of switch according to claim 1, wherein the method of switch further comprises:
transmitting, by the base station, the paging message to the UE.

3. The method of switch according to claim 1 or 2, wherein the paging message further contains indication information indicating that the UE is configured with a connectionless scheme.

4. The method of switch according to claim 1 or 2, wherein the radio resource control connection release message further contains information indicating a cause of connection release of this time.

5. A method of transmission scheme switch, comprising:
receiving, by a UE, a radio resource control connection release message transmitted by a base station; and
releasing a radio resource control connection according to the radio resource control connection release message, so as to terminate data transmission performed by using a connectionless scheme.

6. The method of switch according to claim 5, wherein the method of switch further comprises:
receiving, by the UE, a paging message transmitted by the base station; and
triggering a service request according to the paging message, so as to perform data transmission by using a connection scheme.

7. The method of switch according to claim 5 or 6, wherein the radio resource control connection release message further contains information indicating a cause of connection release of this time.

8. The method of switch according to claim 5 or 6, wherein the releasing a radio resource control connection according to the radio resource control connection release message, so as to terminate data transmission performed by using a connectionless scheme, comprises:
receiving, by a radio resource control stratum of the UE, the radio resource control connection release message, and releasing the radio resource control connection;
transmitting, by the radio resource control stratum, indication for radio resource control connection release to a non-access stratum of the UE; and
terminating, by the non-access stratum, the data transmission performed by using a connectionless scheme within a predefined period, after the non-access stratum receives the indication.

9. A method of transmission scheme switch, comprising:
judging, by a UE, whether an uplink service is suitable for using a connectionless scheme for data transmission when the uplink service is arrived; and
releasing, by the UE, a radio resource control connection when the uplink service is not suitable for using a connectionless scheme for data transmission, so as to terminate data transmission performed by using the connectionless scheme.

10. The method of switch according to claim 9, wherein the method of switch further comprises:
triggering, by the UE, a service request to perform data transmission for the uplink service by using a connection scheme.

11. The method of switch according to claim 9, wherein the judging by a UE whether an uplink service is suitable for using a connectionless scheme for data transmission when the uplink service is arrived, comprises:
comparing the uplink service with a pre-obtained traffic flow template; and
determining that the uplink service is suitable for using a connectionless scheme for data transmission when the uplink service is in consistence with the traffic flow template.

12. The method of switch according to claim 9, wherein the judging by a UE whether an uplink service is suitable for using a connectionless scheme for data transmission when the uplink service is arrived, comprises:
comparing an attribute value of the uplink service with a predefined threshold value; and
determining according to a result of comparison, whether the uplink service is suitable for using a connectionless scheme for data transmission.

13. The method of switch according to claim 12, wherein the attribute value of the uplink service comprises one piece of the following information or a combination thereof: information on total amount of data, information on a size of a data packet, information on a size of a burst data stream, information on a data packet interval, or information on an average data packet rate.

14. The method of switch according to any one of claims 9-13, wherein if the uplink service is not suitable for using a connectionless scheme for data transmission, the method further comprises:
transmitting, by the UE, a connection release request to a base station; and
receiving a radio resource control connection release message transmitted by the base station, and terminating the data transmission performed by using the connectionless scheme.

15. The method of switch according to claim 14, wherein the transmitting by the UE a connection release request to a base station, receiving a radio resource control connection release message transmitted by the base station, and terminating the data transmission performed by using the connectionless scheme, comprise:
triggering, by a non-access stratum of the UE, connection release, and indicating a radio resource control stratum of the UE to initiate radio resource control connection release;
transmitting, by the radio resource control stratum, a radio resource control connection release request to the base station;
receiving, by the radio resource control stratum, a radio resource control connection release message transmitted by the base station, and releasing the radio resource control connection;
transmitting, by the radio resource control stratum, indication for radio resource control connection release to the non-access stratum; and
terminating, by the non-access stratum, the data transmission performed by using the connectionless scheme within a predefined period, after the non-access stratum receives the indication.

16. The method of switch according to claim 14, wherein the connection release request further contains information indicating a cause of connection release of this time.

17. A method of transmission scheme switch, comprising:
judging, by a UE, whether an uplink service is suitable for using a connectionless scheme for data transmission when the uplink service is arrived; and
performing, by the UE, modification and/or configuration on a radio bearer when the uplink service is not suitable for using a connectionless scheme for data transmission, so as to perform data transmission for the uplink service by using a connection scheme.

18. The method of switch according to claim 17, wherein the performing modification and/or configuration on a radio bearer by the UE comprises:
interrupting, by the UE, the data transmission performed by using the connectionless scheme, and transmitting an uplink information transmission message to a base station;
receiving a radio resource control connection reconfiguration message transmitted by the base station; and
performing modification and/or configuration on the radio bearer according to the radio resource control connection reconfiguration message, so as to perform data transmission for the uplink service by using a connection scheme.

19. The method of switch according to claim 17 or 18, wherein the uplink information transmission message contains information indicating the UE to use the connectionless scheme.

20. A method of transmission scheme switch, comprising:
receiving, by a base station, an uplink information transmission message transmitted by a UE; and
transmitting an initial UE message to a mobile management entity.

21. The method of switch according to claim 20, wherein the method further comprises:
receiving, by the base station, an initial context setup request message transmitted by the mobile management entity, the initial context setup request message containing information on setup and/or modification of a radio bearer; and
transmitting a radio resource control connection reconfiguration message to the UE.

22. The method of switch according to claim 20 or 21, wherein the initial UE message contains information indicating the UE to use the connectionless scheme.

23. A method of transmission scheme switch, comprising:
receiving, by a mobile management entity, an initial UE message transmitted by a base station, the initial UE message containing information indicating the UE to use a connectionless scheme;
reestablishing a radio bearer to which the connectionless scheme corresponds; and
transmitting an initial context setup request message to the base station, the initial context setup request message containing information on setup and/or modification of the radio bearer.

24. The method of switch according to claim 23, wherein the method further comprises:
receiving, by the mobile management entity, an initial context setup response message transmitted by the base station; and
transmitting a radio bearer modification request message to a serving gateway.

25. Abase station, comprising:
a first receiving unit configured to receive a paging message, the paging message containing identity of a UE;
a first judging unit configured to judge whether the UE performs data transmission by using a connectionless scheme; and
a first transmitting unit configured to transmit a radio resource control connection release message to the UE when the UE performs data transmission by using a connectionless scheme.

26. The base station according to claim 25, wherein the base station further comprises:
a second transmitting unit configured to transmit the paging message to the UE.

27. A UE, comprising:
a second receiving unit configured to receive a radio resource control connection release message transmitted by a base station; and
a first releasing unit configured to release a radio resource control connection according to the radio resource control connection release message, so as to terminate data transmission performed by using a connectionless scheme.

28. The UE according to claim 27, wherein the UE further comprises:
a third receiving unit configured to receive a paging message for a downlink service transmitted by the base station; and
a first requesting unit configured to trigger a service request according to the paging message, so as to perform data transmission by using a connection scheme.

29. A UE, comprising:
a second judging unit configured to judge whether an uplink service is suitable for using a connectionless scheme for data transmission when the uplink service is arrived; and
a second releasing unit configured to release a radio resource control connection when the uplink service is not suitable for using a connectionless scheme for data transmission, so as to terminate data transmission performed by using the connectionless scheme.

30. The UE according to claim 29, wherein the UE further comprises:
a second requesting unit configured to trigger a service request, so as to perform data transmission for the uplink service by using a connection scheme.

31. The UE according to claim 29 or 30, wherein the UE further comprises:
a third transmitting unit configured to transmit a connection release request to a base station; and
a fourth receiving unit configured to receive a radio resource control connection release message transmitted by the base station, and terminate the data transmission performed by using the connectionless scheme.

32. A UE, comprising:
a third judging unit configured to judge whether an uplink service is suitable for using a connectionless scheme for data transmission when the uplink service is arrived; and
a connection reconfiguring unit configured to perform modification and/or configuration on a radio bearer when the uplink service is not suitable for using a connectionless scheme for data transmission, so as to perform data transmission for the uplink service by using a connection scheme.

33. The UE according to claim 32, wherein the connection reconfiguring unit comprises:
a fourth transmitting unit configured to interrupt the data transmission performed by using the connectionless scheme, and transmit an uplink information transmission message to a base station;
a fifth receiving unit configured to receive a radio resource control connection reconfiguration message transmitted by the base station; and
a bearer modifying unit configured to perform modification and/or configuration on the radio bearer according to the radio resource control connection reconfiguration message, so as to perform data transmission for the uplink service by using a connection scheme.

34. A base station, comprising:
a sixth receiving unit configured to receive an uplink information transmission message transmitted by UE; and
a fifth transmitting unit configured to transmit an initial UE message to a mobile management entity.

35. The base station according to claim 34, wherein the base station further comprises:
a seventh receiving unit configured to receive an initial context setup request message transmitted by the mobile management entity, the initial context setup request message containing information on setup and/or modification of a radio bearer; and
a sixth transmitting unit configured to transmit a radio resource control connection reconfiguration message to the UE.

36. A mobile management entity, comprising:
an eighth receiving unit configured to receive an initial UE message transmitted by a base station, the initial UE message containing information indicating the UE to use a connectionless scheme;
a reestablishing unit configured to reestablish a radio bearer to which the connectionless scheme corresponds; and
a seventh transmitting unit configured to transmit an initial context setup request message to the base station, the initial context setup request message containing information on setup and/or modification of the radio bearer.

37. The mobile management entity according to claim 36, wherein the mobile management entity further comprises:
a ninth receiving unit configured to receive an initial context setup response message transmitted by the base station; and
an eighth transmitting unit configured to transmit a radio bearer modification request message to a serving gateway.

38. A communication system, comprising the UE as claimed in claim 25 or 26, and the base station as claimed in claim 27 or 28;
or comprising the UE as claimed in any one of claims 29-31;
or comprising the UE as claimed in claim 32 or 33, the base station as claimed in claim 34 or 35, and the mobile management entity as claimed in claim 36 or 37.

39. A computer-readable program, wherein when the program is executed in a UE, the program enables a computer to carry out the method of transmission scheme switch as claimed in any one of claims 5-19 in the UE.

40. A storage medium in which a computer-readable program is stored, wherein the computer-readable program enables a computer to carry out the method of transmission scheme switch as claimed in any one of claims 5-19 in a UE.

41. A computer-readable program, wherein when the program is executed in a base station, the program enables a computer to carry out the method of transmission scheme switch as claimed in any one of claims 1-4 and 20-22 in the base station.

42. A storage medium in which a computer-readable program is stored, wherein the computer-readable program enables a computer to carry out the method of transmission scheme switch as claimed in any one of claims 1-4 and 20-22 in a base station.
